Europäisches Patentamt

European Patent Office

Office européen des brevets

(11) Veröffentlichungsnummer : **0 112 937**
**B1**

(12) **EUROPÄISCHE PATENTSCHRIFT**

(45) Veröffentlichungstag der Patentschrift :
07.05.86

(51) Int. Cl.⁴ : **B 65 G 53/66, B 65 D 88/66**

(21) Anmeldenummer : **82112135.7**

(22) Anmeldetag : **31.12.82**

(54) Anordnung zum Fördern von insbesondere schwerfliessenden Schüttgütern.

(43) Veröffentlichungstag der Anmeldung :
**11.07.84 Patentblatt 84/28**

(45) Bekanntmachung des Hinweises auf die Patenterteilung : **07.05.86 Patentblatt 86/19**

(84) Benannte Vertragsstaaten :
**AT CH DE FR LI NL SE**

(56) Entgegenhaltungen :
**DE-A- 1 816 485**
**DE-A- 2 533 070**
**DE-A- 2 612 899**
**FR-A- 2 332 210**
**GB-A- 2 013 633**

(73) Patentinhaber : **Johannes Möller Hamburg GmbH &
Co. KG
Schillerstrasse 43
D-2000 Hamburg 50 (DE)**

(72) Erfinder : **Lübbe, Thies, Ing.-grad.
Heidkoppel 10
D-2201 Kölln-Reisig (DE)**
Erfinder : **Möller, Hermann, Dr.
Klövensteenweg 68
D-2000 Hamburg 56 (DE)**

(74) Vertreter : **Minetti, Ralf, Dipl.-Ing.
Ballindamm 15
D-2000 Hamburg 1 (DE)**

## Beschreibung

Die Erfindung betrifft eine Anordnung zum Fördern von insbesondere schwerfließenden Schüttgütern aus einem Fördergefäß in eine pneumatische Förderleitung in Abhängigkeit vom Druck in der Förderleitung (DE-A-2 533 070).

Soll das Schüttgut aus einem Fördergefäß über seinen Auslauftrichter in eine pneumatische Förderleitung abgeführt werden, so besteht die Gefahr, daß beispielsweise bei einem Zusammenbruch einer Materialbrücke im Behälter oder infolge allgemeiner materialspezifischer Eigenschaften des Schüttgutes, wie Feuchtigkeit, ein so hoher Anteil in die Förderleitung abgegeben wird, daß Verstopfungen auftreten. Andererseits soll aber auch nicht ständig wegen dieser Gefahr nur wenig Material in die Förderleitung eingespeist werden, weil dann die Förderung unwirtschaftlich wäre infolge einer nur geringen Beladung des Fördergases.

Um eine möglichst konstante Förderleistung zu erhalten, ist es nach der DE-A-2 533 070 bekannt, die Dosierung in Abhängigkeit vom Druck in der Förderleitung zu steuern. Dafür ist in dem Förderbehälter ein kegelförmiges Hubventil angeordnet, dessen Hübe über ein Steuergerät in Abhängigkeit vom Druck der Förderleitung bestimmt werden. Für die Förderung schwerfließender Schüttgüter ist eine derartige Anordnung in der Praxis nicht geeignet, da sie zu aufwendig und störanfällig ist. So muß fortlaufend für die Aufrechterhaltung des notwendigen Überdruckes im Behälter die Abdichtung der Hubeinrichtung sichergestellt werden. Außerdem besteht die Gefahr eines Verschleißes des Ventilkörpers bzw. der als Ventilsitz wirksamen Auslaßöffnung und die Gefahr von Brückenbildungen, obwohl derartiges mit einer solchen Anordnung vermieden werden soll. Schließlich ist von Nachteil, daß besonders bei schwerfließfähigen Schüttgütern nur eine portionsweise Abgabe des Fördergutes aus dem Behälter in die Förderleitung infolge der Hubbewegungen des Ventilkörpers stattfindet und nicht zu einer gleichmäßigen Dosierung beiträgt.

Aufgabe der Erfindung ist es, eine im Aufbau einfache und im Betrieb zuverlässige Anordnung zum Fördern von Schüttgütern zu schaffen, die besonders geeignet ist für schlecht rieselfähige Schüttgüter, welche in Abhängigkeit vom Druck in der Förderleitung nicht portionsweise, sondern durchgehend in regelbaren Mengen abzufördern sind. Dafür sieht die Erfindung vor, daß in der Förderleitung ein Meßumformer angeordnet ist, der den Antriebsmotor eines im Fördergefäß liegenden schwingfähigen Gitters steuert. Dieser Meßfühler wird vorzugsweise über einen Regler an den Motor angeschlossen, damit die Möglichkeit besteht, weitere Einflußgrößen für eine kontinuierliche Abförderung berücksichtigen zu können.

Bei dem Meßumformer handelt es sich um ein an sich bekanntes Gerät, mit dem/der Druck in einer Leitung gemessen wird und in ein vorzugsweise elektrisches Signal umgewandelt wird, beispielsweise in eine Spannung oder in Stromstärke umgewandelt wird, durch die der Antriebsmotor angesteuert wird. Dadurch läßt sich einerseits erreichen, daß eine weitestgehend kontinuierliche Einspeisung eines schlecht fließenden Schüttgutes in die Förderleitung erreicht wird. Andererseits kann dabei ein optimales Mischungsverhältnis zwischen Fördergas und Schüttgut angesteuert werden, das um so wirtschaftlicher ist, je dichter es an der sogenannten Stopfgrenze liegt, für die der Druck in der Förderleitung maßgeblich ist. Ist dieses geeignete Verhältnis in der Druckleitung noch gegeben, so wird der Antriebsmotor der Vibrationsvorrichtung über den Meßumformer weiter in Betrieb gehalten. Unmittelbar vor Erreichen eines Druckes, welcher der Stopfgrenze entspricht, schaltet der Meßumformer den Antriebsmotor ab, so daß kein weiteres oder nur wenig Schüttgut in die Abförderleitung eingespeist wird, bis eine untere Sollwertgrenze im Druck erreicht ist und der Antriebsmotor über den Meßumformer wieder in Betrieb gesetzt wird. Diese Fahrweise läßt sich während des gesamten Förderablaufes in der Gestalt fortsetzen, daß fortlaufend ein hohes Beladungsverhältnis aufrechterhalten bleibt, ohne daß die Gefahr von Verstopfungen in der Förderleitung gegeben wäre.

Ist der Meßumformer über eine Regelstrecke an den Antriebsmotor angeschlossen, so lassen sich weitere Einflußgrößen für eine kontinuierliche Abförderung berücksichtigen. Dazu ist vorgesehen, daß das Fördergefäß mit einer Waage versehen ist, die an die Regelstrecke angeschlossen ist für eine Steuerung des Antriebsmotors für die Vibrationsvorrichtung in Abhängigkeit von der Gewichtsabnahme pro Zeiteinheit. Als Waage kommt hierbei beispielsweise eine Druckmeßdose in Betracht oder ein Dehnungsmeßstreifen, mit denen in Abhängigkeit von dem Gewicht des Fördergefäßes und seines Inhaltes elektrische Signale ausgelöst werden, die über einen Verstärker auf die Regelstrecke gegeben werden, so daß also über die Betätigung der Antriebsmotore eine bestimmte Fördermenge in einer bestimmten Zeiteinheit abzugeben ist. Da die Regelstrecke in einem derartigen Falle die Gewichtsabnahme pro Zeiteinheit eingegeben erhält und außerdem den Druck in der Abförderleitung über den Meßumformer läßt sich durch die Regelstrecke entscheiden, ob der Motor angesteuert werden soll oder nicht. Dadurch läßt sich also eine wählbare Menge pro Zeiteinheit austragen und gleichzeitig verhindern, daß ein überkritisches Druckverhältnis in der Abförderleitung vorliegt, welches zu Verstopfungen führen könnte, wobei die Regelstrecke die Möglichkeit eröffnet, dem einen oder dem anderen Signal die Priorität einzuräumen. Vorteilhaft ist es, wenn dafür zusätzlich in der Zuförderleitung ein Regelventil angeordnet ist, das mit der Regelstrecke verbunden ist, so daß also in Abhängigkeit von den jeweils gegebenen Verhältnissen auch die Menge des zugeführten Fördergases geregelt werden kann.

Die vorbeschriebene Anordnung ist nicht beschränkt auf Anlagen mit einem Fördergefäß, das nur einen Auslauftrichter aufweist. Es besteht vielmehr die Möglichkeit, die erfindungsgemäße Lösung in weiterer Ausgestaltung anzuwenden bei Anlagen mit mehreren Auslauftrichtern. Eine derartige Anlage besitzt den Vorteil, aus einem Fördergefäß eine oder mehrere Verbrauchsstellen versorgen zu können, was für viele Anwendungsfälle von Vorteil ist. Sollen mit einer solchen Anordnung eine oder mehrere Verbrauchsstellen kontinuierlich versorgt werden, so läßt sich dem Fördergefäß ein sogenanntes Schleusgefäß vorschalten, aus dem das Schüttgut nach erreichen eines bestimmten Betriebsdruckes in bekannter Art und Weise übergeschleust wird.

Es besteht im übrigen die Möglichkeit, die Anlage als Saug-Förderanlage zu betreiben bzw. die Schüttgüter mittels Saugförderung zu transportieren anstatt der Anwendung von Druckgas.

Zwei Ausführungsbeispiele sind nachstehend unter Bezugnahme auf eine Zeichnung erläutert. In der Zeichnung zeigen :

Figur 1   eine Förderanlage für Schüttgüter mit einem Auslauftrichter und einer Förderleitung ;

Figur 2   eine Förderanlage mit zwei Auslauftrichtern und zwei Förderleitungen.

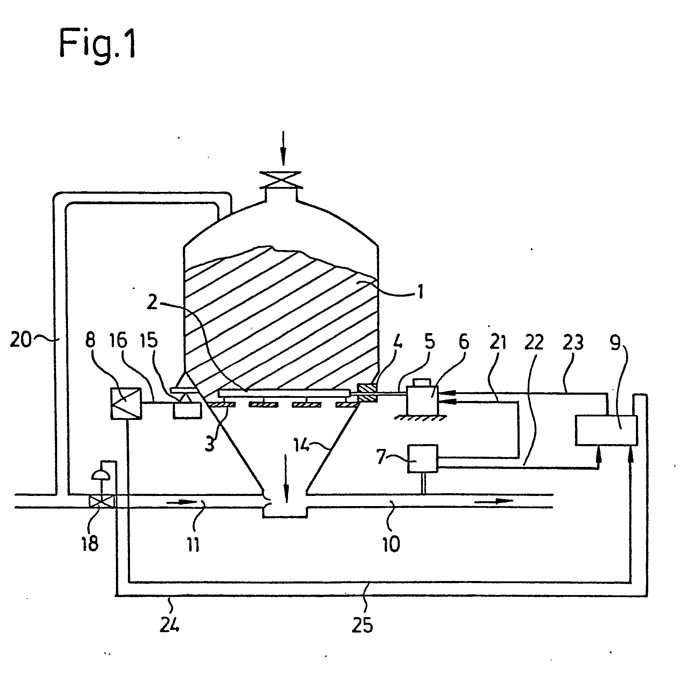

Die in Figur 1 wiedergegebene Ausführungsform einer Anlage zum Fördern von schwerfließenden Schüttgütern besitzt ein Fördergefäß 1 in dem das Schüttgut unter Überdruck steht beispielsweise unter einem Druck von 4-10 bar.

Am Boden des Fördergefäßes 1 befindet sich ein Gitter 2, das schwingfähig auf Federn 4 gelagert ist. Um das Gitter 2 in Vibrationen versetzen zu können, ist ein Antriebsmotor 6 vorgesehen, der mit dem Gitter 2 über eine Stange 5 verbunden ist.

Unterhalb des Gitters 2 liegt ein Entlastungsboden 3. Darunter befindet sich der Auslauftrichter 14, durch den das Schüttgut in eine Förderleitung abzugeben ist. Diese Förderleitung ist unterteilt in eine Abförderleitung 10 für das Gemisch aus Fördergas und Schüttgut und in eine Zuförderleitung 11 für das Fördergas, das entsprechend dem Pfeil in der Leitung 11 strömt.

An die Abförderleitung 10 ist ein Meßumformer 7 angeschlossen. Mittels dieses Meßumformers 7 wird der Druck in der Abförderleitung 10 gemessen. Das Meßergebnis wird umgeformt in ein elektrisches Signal mit dem über eine Leitung 21 der Antriebsmotor 6 zu steuern ist. Außerdem ist der Meßumformer 7 über eine Leitung 22 an eine Regelstrecke 9 angeschlossen, bei dem es sich um ein handelsübliches elektronisches Datenverarbeitungsgerät handeln kann. Die Regelstrecke 9 ist über eine Signalleitung 23 ebenfalls an den Motor 6 angeschlossen.

Das Fördergefäß mit dem Schüttgut ruht auf einer Waage 15, bei der es sich um eine Druckmeßdose handeln kann oder beispielsweise um einen Dehnungsmeßstreifen, der in Abhängigkeit vom Gewicht des Fördergefäßes 1 mit seinem Inhalt über die Leitung 16 ein Steuersignal auf den Verstärker 8 gibt, welcher über eine Leitung 24 an die Regelstrecke 9 angeschlossen ist.

Vor dem Regelventil 18 ist an die Zuförderleitung 11 eine Überdruckleitung 20 angeschlossen, die in dem Fördergefäß 1 mündet, um dort einen Überdruck aufrecht zu erhalten.

Bei einer Abförderung von Schüttgut tritt in der Abförderleitung 10 ein Druck auf, der abhängig ist von dem Verhältnis der Förderluftmenge zur Menge des Schüttgutes. Dieser Druck läßt sich also einerseits beeinflussen durch die Menge des zugeführten Schüttgutes. Dies erfolgt durch Messung des Druckes über den Meßumformer und die Steuerung des mit ihm verbundenen Vibrationsantriebes 6, der das schwingfähige Gitter 2 betätigt. Sinkt der Druck in der Förderleitung 10 unter einen vorgegebenen Wert ab, so wird über den Meßumformer 7 der Antriebsmotor 6 in Betrieb gesetzt, so daß eine größere Schüttgutmenge zugeführt wird. Ist die zugeführte Schüttgutmenge so groß, daß ein vorgegebener Druckwert in der Leitung 10 überschritten wird, so wird über den Meßumformer 7 der Vibrationsantrieb 6 außer Betrieb gesetzt. Unabhängig davon läßt sich der Druck in der Förderleitung 10 beeinflussen durch die Regelung der zugeführten Luft bzw. Gasmenge in der Zuförderleitung 11. Dies erfolgt über die Regelstrecke 9 an welche das Regelventil 18 angeschlossen ist. Zusätzlich ergibt sich eine Möglichkeit der Steuerung des Motors 6 und damit der Fördermenge über die Regelstrecke 9 in Abhängigkeit der geförderten Schüttgutmenge während einer bestimmten Zeiteinheit durch die Auswertung der Signale der Waage 15, die über die Leitung 25 an die Regelstrecke 9 angeschlossen ist.

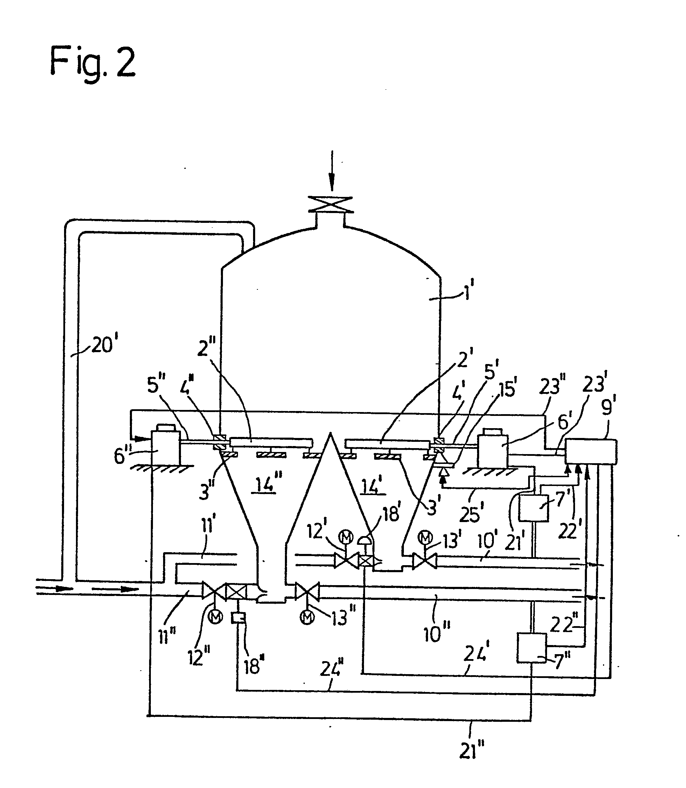

Bei der Anordnung nach Figur 2, bei welcher funktionsmäßig gleiche Teile mit gleichen Bezugsnummern versehen sind, ist das Fördergefäß 1′ bodenseitig mit zwei Auslauftrichtern 14′ und 14″ versehen, denen jeweils voneinander unabhängig eine Vibrationsvorrichtung zugeordnet ist, die aus einem Gitter 2′ bzw. 2″ sowie einem Entlastungsboden 3′ bzw. 3″ einer Abdichtung 4′ bzw. 4″ einer Koppelstange 5′ bzw. 5″ und einem Antriebsmotor 6′ bzw. 6″ bestehen.

An die Abförderleitungen 10′ und 10″ ist wiederum jeweils ein Meßumformer 7′ bzw. 7″ angeschlossen. Diese sind über die Leitungen 22′ bzw. 22″ an eine gemeinsame Regelstrecke 9′ angeschlossen. Die Regelstrecke 9′ ist über die Leitung 23′ mit dem Antriebsmotor 6′ verbunden und über die Leitung 23″ mit dem Antriebsmotor 6″.

Die Waage 15′ ist ebenfalls über eine Leitung 25′ an der Eingangsseite der Regelstrecke 9′ angeschlossen.

Die beiden Meßumformer 7′ und 7″ sind jeweils mit einem Antriebsmotor 6′ bzw. 6″ über die Leitungen 21′ und 21″ verbunden.

Zur Regelung der zugeführten Luftmenge ist in der Zuförderleitung 11' ein erstes Regelventil 18' angeordnet, das über eine Leitung 24' mit der Regelstrecke 9' verbunden ist und in der Zuförderleitung 11" ein Regelventil 18", das über die Leitung 24" von der Regelstrecke 9' anzusteuern ist.

Zusätzlich sind Absperrventile 12' und 13' in der Zu- und Abförderleitung 11' und 10' angeordnet wie auch Absperrventile 12", 13" in der parallellaufenden Zu- und Abförderleitung 11" und 10". Diese jeweils beliebig ansteuerbaren Ventile ermöglichen es, im Bedarfsfalle die eine oder andere Leitung stillzulegen am Eingang und Ausgang der Mündung eines Auslauftrichters.

Der Oberdruck im Gefäß 1' wird ähnlich wie bei Figur 2 durch eine zusätzliche Rohrleitung 20', die von der Fördergasversorgungsleitung 11' bzw. 11" abgeht, aufgegeben.

Die in Figur 2 dargestellte Anordnung mit 2 Auslaufstutzen 14' und 14" läßt sich naturgemäß auch beliebig auf 3 oder weitere Anschlußstutzen erweitern.

## Patentansprüche

1. Anordnung zum Fördern von insbesondere schwerfließenden Schüttgütern aus einem Fördergefäß in eine pneumatische Förderleitung in Abhängigkeit vom Druck in der Förderleitung, dadurch gekennzeichnet, daß in der Förderleitung (10, 10', 10") ein Meßumformer (7, 7', 7") angeordnet ist, der den Antriebsmotor (6, 6') eines im Fördergefäß (1) liegenden schwingfähigen Gitters (2) steuert.

2. Anordnung nach Anspruch 1, dadurch gekennzeichnet, daß der Meßumformer (7) über eine Regelstrecke (9) an den Antriebsmotor (6) angeschlossen ist.

3. Anordnung nach Anspruch 2, dadurch gekennzeichnet, daß in der mit dem Auslauftrichter (14) verbundenen Zuförderleitung (11, 11', 11") ein Regelventil (18) angeordnet ist, das mit der Regelstrecke (9) verbunden ist.

4. Anordnung nach Anspruch 2, dadurch gekennzeichnet, daß das Fördergefäß (1) mit einer Waage (15) versehen ist, die an die Regelstrecke (9) angeschlossen ist für eine Steuerung des Antriebsmotors (6) in Abhängigkeit von der Gewichtsabnahme pro Zeiteinheit.

## Claims

1. Arrangement for the transportation of in particular hardly flowing discrete material out of a carrier into a pneumatic conveyor pipe line subject to the presure in the conveyor pipe line, characterized in that a measuring transducer (7, 7', 7") which controls the driving motor (6, 6') of a swinging grid (2) placed in the carrier (1) is placed in the conveyor pipe line (7, 7', 7").

2. Arrangement according to claim 1, characterized in that the measuring transducer (7) is connected to the driving motor (6) with a controlled system (9).

3. Arrangement according to claim 2, characterized in that a control valve (18) which is connected to the controlled system (9) is placed in the supplying pipe (11, 11', 11") which is connected to the discharging hopper (14).

4. Arrangement according to claim 2, characterized in that the carrier (1) is provided with scales (15) which are connected to the controlled system (9) for a control of the driving motor (6) subject to the shortage in weight per unit of time.

## Revendications

1. Dispositif pour transporter en particulier des matières en vrac qui s'écoulent difficilement à partir d'une benne transporteuse dans une tuyauterie pneumatique de transport en fonction de la pression à l'intérieur de la tuyauterie de transport, caractérisé en ce qu'un transducteur de mesure (7, 7', 7") qui commande le moteur de commande (6, 6') d'une grille (2) capable d'osciller située dans la benne transporteuse (1) est disposé dans la tuyauterie de transport (10, 10', 10").

2. Dispositif selon la revendication 1, caractérisé en ce que le transducteur de mesure (7) est relié au moteur de commande (6) au moyen d'un système asservi (9).

3. Dispositif selon la revendication 2, caractérisé en ce qu'une soupape de réglage (18) qui est reliée au système asservi (9) est placée dans la tuyauterie d'alimentation (11, 11', 11") reliée à la trémie de décharge.

4. Dispositif selon la revendication 2, caractérisé en ce que la benne transporteuse (1) est pourvue d'une balance (15) qui est reliée au système asservi (9) pour la commande du moteur de commande (6) en fonction de la perte de poids par unité de temps.

Fig.1

0 112 937

# Fig. 2